# FASCICULE DE BREVET EUROPEEN

(11) **EP 1 122 135 B1**
(45) Date de publication et mention de la délivrance du brevet: **28.01.2004**
(21) Numéro de dépôt: 01400264.6
(22) Date de dépôt: 02.02.2001
(51) Int. Cl.: B60R 22/22

(54) **Banquette arrière de véhicule, ses boucles de ceintures de sécurité à position d'accrochage réglable**
Kraftfahrzeug- Rücksitzbank, ihre Gurtschlösser mit veränderbarer Einhakposition
Vehicle rear seat, its seatbelt buckles with adjustable fixing position

(30) Priorité: 02.02.2000 FR 0001301
(43) Date de publication de la demande: 08.08.2001
(73) Titulaire: Renault s.a.s., 92100 Boulogne Billancourt (FR)
(72) Inventeur: Chamouard, François, 78960 Voisins le Bretonneux (FR)

(56) Documents cités:
- FR-A- 2 726 521
- FR-A- 2 774 959
- US-A- 4 915 451

## Description

L'invention concerne un dispositif de réglage de la position d'accrochage de boucles de ceintures de sécurité équipant la banquette arrière d'un véhicule automobile. Un dispositif tel que défini dans le préambule de la revendication 1 est connu de FR-A-2 774 959.

Habituellement, les constructeurs équipent, de façon fixe, la banquette arrière d'un véhicule automobile avec deux ou trois ceintures de sécurité.

Avec deux ceintures, la largeur effective d'assise est maximale mais, le véhicule est classé par l'administration dans la catégorie des quatre places assises seulement, ce qui est souvent commercialement indésirable. Avec trois ceintures, le véhicule est classé dans la catégorie recherchée des cinq places assises mais la largeur effective d'assise est étriquée et inadaptée à des adultes normaux, ne convenant qu'à des enfants.

Il existe donc un besoin pour un système qui permettrait de régler, à volenté, la position des boucles de ceintures de sécurité équipant la banquette arrière d'un véhicule automobile de façon à disposer soit de trois petites places pour enfants ou petits adultes, soit de deux places permettant d'asseoir confortablement deux adultes normaux ou de forte corpulence ou de ceinturer deux sièges de sécurité pour jeunes enfants.

L'invention vise à satisfaire ce besoin.

Plus particulièrement, l'invention concerne un dispositif de réglage de la position d'accrochage de boucles des ceintures de sécurité équipant la banquette arrière d'un véhicule automobile, qui est destiné à être implanté en-dessous de l'assise de cette banquette arrière, caractérisé en ce qu'il comprend :
une paire de chariots portant chacun deux corps de gâche destinés à recevoir les pênes de boucles de ceintures de sécurité, chacun de ces chariots comportant des moyens permettant de le verrouiller en deux positions, une première position située au voisinage du milieu de la banquette arrière et une deuxième position correspondant sensiblement au tiers de la largeur de la banquette arrière pour l'un des chariots et au deux tiers de ladite largeur pour l'autre chariot.

Selon un mode de mise en oeuvre particulier lesdits moyens comprennent une réglette sur laquelle sont montés coulissants lesdits chariots, ces chariots comprenant chacun un doigt rétractable susceptible d'être inséré dans des perforations ménagées dans la réglette en des emplacements apprcpriés afin de verrouiller, de façon amovible, les chariots dans ladite première ou ladite seconde position.

Le dispositif de l'invention convient à des véhicules dont la banquette arrière est rabattable où dont l'assise de la banquette arrière est amovible, afin que l'implantation dudit dispositif soit possible.

La description qui va suivre, faite en se référant aux dessins annexés, fera bien comprendre l'invention. Sur les dessins :
La figure 1 est une vue en perspective du dispositif de l'invention, la banquette arrière étant omise;
la figure 2 est une vue en coupe verticale d'un détail du dispositif de la figure 1, en position opérationnelle;
la figure 3 est une vue en perspective d'une banquette arrière équipée du dispositif de la figure 1;
la figure 4 est une vue en coupe transversale de l'assise de la banquette arrière; et les figures 5 et 6 sont des vues schématiques montrant le positionnement des porte-boucles du dispositif de l'invention dans la configuration à trois et à deux passagers, respectivement.

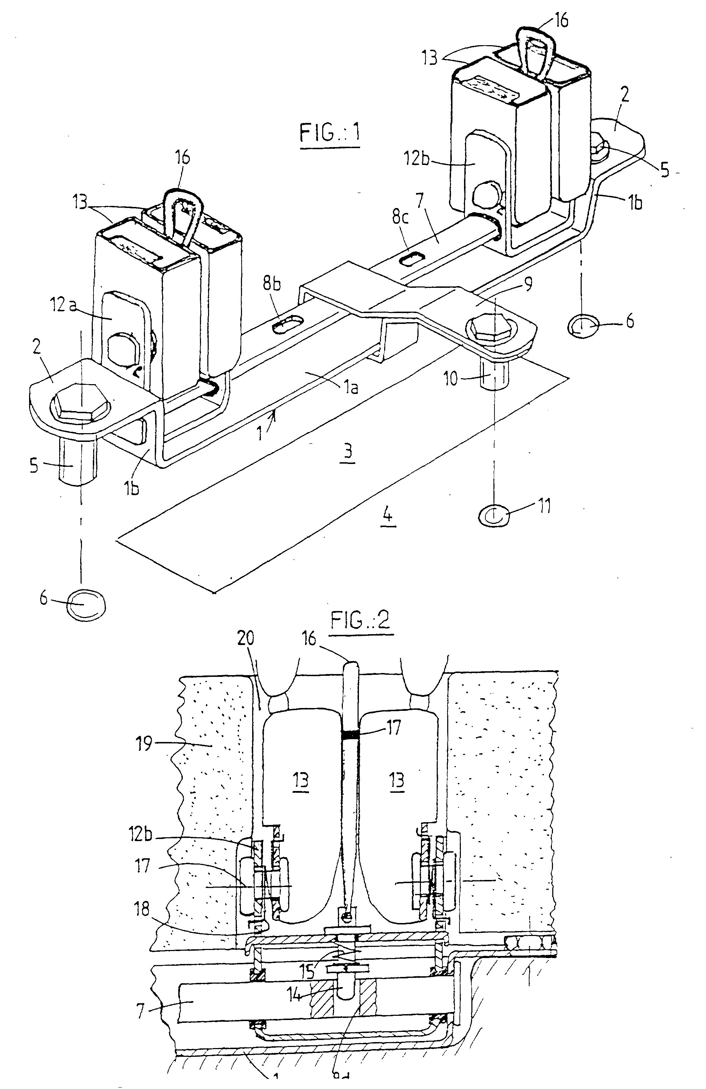

Sur la figure 1 est représenté un mode de réalisation du dispositif de l'invention. Ce dispositif comprend un support 1 en forme de U allongé, muni de deux pattes 2 extrêmes parallèles à la branche centrale la du U et pouvant être fixé dans un renfoncement 3 prévu dans le plancher 4 du véhicule au moyen de deux boulons 5 reçus dans des trous 6 prévus dans le plancher.

Entre les deux branches extrêmes 1b du U est fixée une réglette 7 de section transversale rectangulaire. Cette réglette s'étend parallèlement à la branche centrale la du U et comporte 4 perforations 8a, 8b, 8c, 8d espacées. Seules les perforations 8b et 8c sont visibles sur la figure 1, les perforations 8a et 8d étant occultées par les chariots décrits ci-après.

Le dispositif comporte aussi un bras transversal 9 soudé au milieu de l'ensemble réglette-support, qui peut être aussi fixé au plancher 4 par un boulon 10 reçu dans un trou 11 prévu dans le plancher, afin d'assurer une fixation dudit ensemble, en sa partie centrale.

Le bras 9 partage la réglette en deux parties droite et gauche.

Sur chacune de ces parties est monté coulissant un chariot 12a ou 12b porteur chacun de deux corps de gâche 13, de conception connue en soi, destinés à recevoir, de façon amovible, les pênes de ceintures de sécurité. Chaque chariot est susceptible d'être verrouillé en deux positions correspondant aux perforations 8a et 8b pour le chariot 12a, et 8c et 8d pour le chariot 12b.

A cette fin, comme on le voit bien sur la figure 2, chaque chariot est pourvu à sa partie inférieure d'un doigt de blocage 14 qui peut être introduit dans l'une des perforations 8 afin de verrouiller le chariot dans l'une des deux positions définies par les deux perforations se trouvant dans la partie droite ou gauche de la réglette afférente audit chariot.

Chaque doigt 14 est maintenu en position de verrouillage par un ressort comprimé 15. Chaque chariot peut être déverrouillé en tirant sur une sangle 16 semi-rigide, maintenue en position droite par un anneau 17 solidaire des corps de gâche 13, ce qui a pour effet de soulever le doigt correspondant hors de la perforation dans laquelle le doigt était inséré. Ceci fait, on peut alors faire glisser le chariot sur la réglette pour l'amener dans l'autre position de blocage. Par exemple, en supposant que le chariot 12a occupe initialement la position définie par la perforation 8a, on peut amener le chariot 12a dans la position occupée par la perforation 8b. Afin de faciliter le réglage de la position de chacun des chariots, on fait en sorte que les positions où les doigts 14 et les perforations 8 sont en coïncidence correspondent à la venue des chariots en butée soit contre les branches extrêmes verticales 1b de la réglette, soit contre le bras transversal 9. Les corps de gâche 13 sont montés pivotants sur les chariots autour d'axes 17 parallèles à la réglette et à la branche centrale du support. Des ressorts de torsion 18 placés autour de ces axes maintiennent normalement les corps de gâche en position verticale. Toutefois, en cas de choc, les corps de gâche peuvent s'aligner avec les pênes des ceintures enclenchés dans lesdits corps de gâche, suivant la direction des efforts exercés par chaque ceinture.

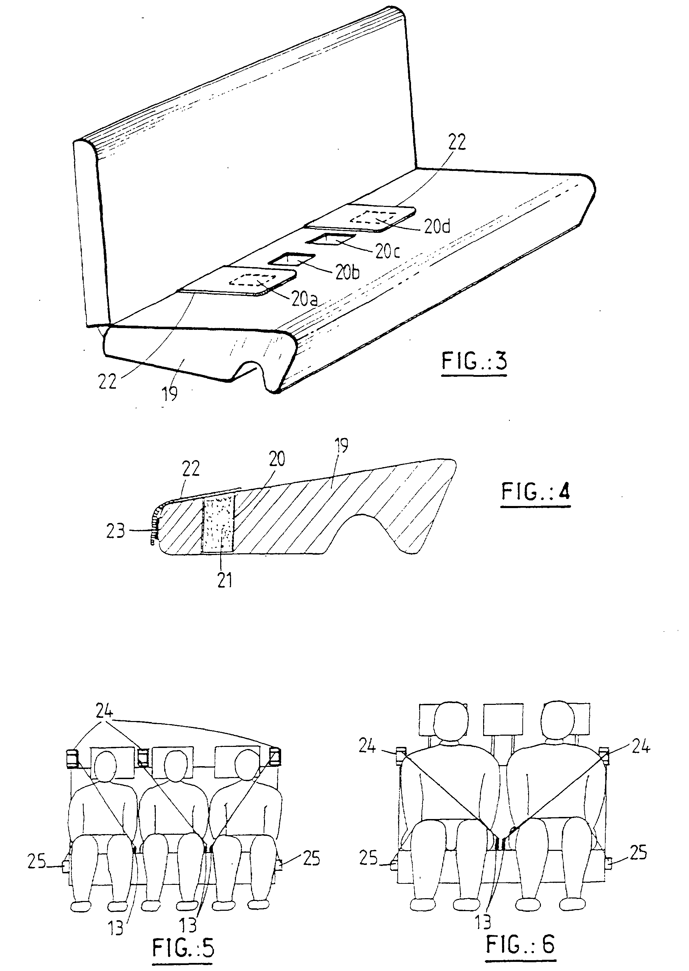

Lorsque le support 1 est positionné dans le renfoncement du plancher du véhicule et boulonné à ce dernier, les chariots 12 et les corps de gâche 13 portés par ces derniers se trouvent en saillie par rapport audit plancher. La banquette arrière qui recouvre l'emplacement du dispositif de l'invention doit être aménagée pour permettre d'accéder aux corps de gâche afin d'accrocher les boucles des ceintures. Comme illustré sur la figure 3, l'assise 19 de la banquette est percée de quatre trous traversants 20a, 20b, 20c et 20d destinés à recevoir les corps de gâche 13 et à permettre l'accès à ceux-ci. Comme seuls deux des quatre trous 20 sont occupés à la fois (soit les trous 20a et 20d, soit les trous 20b et 20c), il est prévu de pouvoir boucher les trous laissés vides par des bouchons en mousse 21 solidaires de languettes, telles que 22, fixées de façon amovible, par un dispositif d'accrochage 23 du type Velcro ® à l'arrière de l'assise de la banquette, comme l'illustre bien la figure 4.

Il est à noter que le réglage de la position d'accrochage des boucles de ceintures de sécurité à l'aide du dispositif de l'invention doit se faire après retrait de l'assise de la banquette arrière ou après basculement de la banquette arrière, afin de permettre le coulissement des chariots après leur déverrouillage.

Sur les figures 5 et 6, on a illustré schématiquement les deux configurations d'accrochage des ceintures de sécurité permises par la mise en oeuvre du dispositif de l'invention, dans le cas de ceintures classiques du type 3 points comprenant un brin inférieur ventral et un brin supérieur en diagonale.

La figure 5 illustre la configuration pour trois passagers de petite taille (enfants ou adultes menus). Dans ce cas les deux chariots 12 sont verrouillés dans les perforations 8a et 8d, respectivement. Chacun des pênes des deux boucles maintenant le brin ventral de la ceinture centrale est accroché à l'un des corps de gâche 13 portés par les chariots 12a et 12b, tandis que le pêne du brin supérieur est accroché à l'un des trois dispositifs tensionneurs 24 classiques prévus au-dessus du dossier de la banquette. Les pênes des boucles maintenant les brins ventraux des ceintures latérales sont accrochés, d'une part, à l'autre corps de gâche portés par les chariots 12a et 12b, et d'autre part à des corps de gâche latéraux 25 assujettis au véhicule. Les pênes des brins supérieurs de ces ceintures latérales sont accrochés aux deux autres dispositifs tensionneurs 24.

La figure 6 illustre la configuration pour deux passagers de taille normale à grande. Dans ce cas les deux chariots 12 sont verrouillés dans les perforations 8c et 8d, respectivement, et seules deux ceintures de sécurité sont mises en service. Les pênes des boucles maintenant le brin ventral de chaque ceinture sont accrochés d'une part à un des corps de gâche d'un des chariots, et, d'autre part, à des corps de gâche latéraux 25 assujettis au véhicule tandis que les pênes des brins supérieurs sont accrochés aux dispositifs tensionneurs 24 latéraux.

Bien entendu, l'invention n'est pas limitée au mode de réalisation décrit et représenté, fourni à titre illustratif et non limitatif.

## Revendications

1. Dispositif de réglage de la position d'accrochage de boucles des ceintures de sécurité équipant la banquette arrière d'un véhicule automobile, qui est destiné à être implanté en-dessous de l'assise (19) de cette banquette arrière, **caractérisé en ce qu'**il comprend:
une paire de chariots (12a, 12b) portant chacun deux corps de gâche (13) destinés à recevoir les pênes de boucles de ceintures de sécurité, chacun de ces chariots comportant des moyens (8, 14) permettant de le verrouiller en deux positions, une première position située au voisinage du milieu de la banquette arrière et une deuxième position correspondant sensiblement au tiers de la largeur de la banquette arrière pour l'un des chariots et au deux tiers de ladite largeur pour l'autre chariot.

2. Dispositif selon la revendication 1, **caractérisé en ce que** lesdits moyens comprennent une réglette (7) sur laquelle sont montés coulissants lesdits chariots (12a, 12b), ces chariots comprenant chacun un doigt rétractable (14) susceptible d'être inséré dans des perforations (8a, 8b, 8c, 8d) ménagées dans la réglette en des emplacements appropriés afin de verrouiller, de façon amovible, les chariots dans ladite première ou ladite seconde position.

3. Véhicule automobile comportant un dispositif tel que défini à la revendication 1 ou 2 implanté en dessous de l'assise (19) de la banquette arrière, **caractérisé en ce que** ladite assise (19) est percée de, trous traversants (20a-20d) destinés à recevoir les corps de gâche (13) et à permettre l'accès à ceux-ci, et **en ce qu'**il est prévu des bouchons (21) amovibles pour obturer les trous traversants laissés libres de corps de gâche.

4. Véhicule selon la revendication 3, **caractérisé en ce que** lesdits bouchons sont en mousse.

5. Véhicule selon la revendication 3 ou 4, **caractérisé en ce que** les bouchons sont solidaires de languettes (22) fixées de façon amovible par un dispositif d'accrochage (23) à l'arrière de l'assise de la banquette.

## Patentansprüche

1. Vorrichtung zur Einstellung der Einhakposition von Sicherheitsgurtschlössern, mit denen die Rückbank eines Automobils ausgestattet ist, die dazu bestimmt ist, unterhalb der Sitzfläche (19) dieser Rückbank verankert zu werden, **dadurch gekennzeichnet, dass** sie umfasst:
ein Paar von Schlitten (12a, 12b), wobei jeder zwei Schließhakengehäuse (13) trägt, die dazu bestimmt sind, Sicherheitsgurt-Hakenriegel aufzunehmen, wobei jeder dieser Schlitten Mittel (8, 14) umfasst, mit Hilfe derer er in zwei Positionen verriegelt werden kann, eine erste Position, die in der Nähe der Mitte der Rückbank liegt, und eine zweite Position, die für den einen Schlitten in etwa dem Drittel der Breite der Rückbank entspricht, und für den anderen Schlitten zwei Dritteln dieser Breite.

2. Vorrichtung gemäß Anspruch 1, **dadurch gekennzeichnet, dass** diese Mittel eine Leiste (7) umfassen, auf der diese Schlitten (12a, 12b) verschiebbar montiert sind, wobei jeder dieser Schlitten einen einfahrbaren Stift (14) umfasst, der dazu geeignet ist, in die Lochungen (8a, 8b, 8c, 8d) eingeführt zu werden, die in der Leiste an geeigneten Stellen vorgesehen sind, um die Schlitten in der ersten oder der zweiten Position in abnehmbarer Weise einzurasten.

3. Kraftfahrzeug, das eine Vorrichtung umfasst, so wie sie im Anspruch 1 oder 2 definiert ist, unterhalb der Sitzfläche (19) der Rückbank verankert, **dadurch gekennzeichnet, dass** diese Sitzfläche (19) mit durchgehenden Löchern (20a-20d) durchbohrt ist, die dazu bestimmt sind, die Schließhakengehäuse (13) aufzunehmen und den Zugang zu diesen zu ermöglichen, und dass es mit herausnehmbaren Stopfen (21) ausgestattet ist, um die durchgehenden Löcher abzudecken, die von den Schließhakengehäusen frei gelassen werden.

4. Fahrzeug gemäß Anspruch 3, **dadurch gekennzeichnet, dass** diese Stopfen aus Schaumstoff sind.

5. Fahrzeug gemäß Anspruch 3 oder 4, **dadurch gekennzeichnet, dass** die Stopfen mit Zungen (22) verbunden sind, die auf abnehmbare Weise durch eine Vorrichtung zum Einhaken (23) an der Rückseite der Sitzfläche der Bank befestigt sind.

## Claims

1. A device for regulating the hooking position of buckles of safety belts fitted on the rear bench seat of an automobile vehicle, which is adapted to be disposed below the seat (19) of this rear bench seat, **characterised in that** it comprises a pair of carriages (12a, 12b) each bearing two latch bodies (13) adapted to receive the bolts of safety belt buckles, each of these carriages comprising means (8, 14) enabling it to be locked in two positions, a first position disposed in the vicinity of the middle of the rear bench seat and a second position corresponding substantially to one third of the width of the rear bench seat for one of the carriages and two thirds of that width for the other carriage.

2. A device as claimed in claim 1, **characterised in that** these means comprise a strip (7) on which the carriages (12a, 12b) are mounted to slide, these carriages each comprising a retractable finger (14) which may be inserted in holes (8a, 8b, 8c, 8d) provided in the strip at appropriate locations in order to lock the carriages in a detachable manner in the first or second position.

3. An automobile vehicle comprising a device as claimed in claim 1 or 2 fitted below the seat (19) of the rear bench seat, **characterised in that** this seat (19) is provided with through holes (20a-20d) adapted to receive the latch bodies and to enable access thereto and **in that** detachable caps (21) are provided to close the through holes left free by the latch bodies.

4. A vehicle as claimed in claim 3, **characterised in that** the caps are of foam.

5. A vehicle as claimed in claim 3 or 4, **characterised in that** the caps are rigid with tongues (22) fixed in a detachable manner by a hooking device (23) to the rear of the seat of the bench seat.
